(19) **Europäisches Patentamt European Patent Office Office européen des brevets**

(11) **EP 2 367 275 B2**

(12) **NEW EUROPEAN PATENT SPECIFICATION**

After opposition procedure

(45) Date of publication and mention of the opposition decision:
**23.12.2020 Bulletin 2020/52**

(45) Mention of the grant of the patent:
**25.10.2017 Bulletin 2017/43**

(21) Application number: **10156854.1**

(22) Date of filing: **18.03.2010**

(51) Int Cl.:
***H02M 3/158*** *(2006.01)*

(54) **Non-isolated DC - DC converter for solar power plant**

Nicht isolierte Gleichspannungswandler für ein Solarkraftwerk

Nicht isolierte Gleichspannungswandler für ein Solarkraftwerk

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**21.09.2011 Bulletin 2011/38**

(73) Proprietor: **MARICI Holdings The Netherlands B.V. 3068AX Rotterdam (NL)**

(72) Inventors:
• **Serpa, Leonardo-Augusto 8008 Zürich (CH)**
• **Canales, Francisco 5405 Baden-Dättwill (CH)**
• **Ho, Ngai-Man 5442 Fislisbach (CH)**

• **Coccia, Antonio 5400 Baden (CH)**

(74) Representative: **Zimmermann & Partner Patentanwälte mbB Postfach 330 920 80069 München (DE)**

(56) References cited:
| | |
|---|---|
| EP-A1- 2 096 743 | EP-A1- 2 341 606 |
| EP-A2- 0 361 254 | EP-A2- 0 852 422 |
| WO-A1-2009/010025 | CH-B1- 698 917 |
| CN-A- 101 610 038 | DE-A1-102006 014 780 |
| DE-A1-102006 014 780 | US-A- 5 402 060 |
| US-A- 6 037 755 | US-A1- 2005 270 000 |
| US-A1- 2009 268 496 | |

**Description**

FIELD OF THE INVENTION

The present invention relates to an electronic power converter, and more particularly to a non-isolated DC - DC converter.

It is known in the art to use a grounded non-isolated DC - DC converter in a power plant in order to avoid circulation of common mode current via a parasitic capacitance existing between a power supply and ground.

Examples of known non-isolated DC - DC converters suitable for a solar power plant are described in publications US2004/0164557 EP0361254 and WO2009/010025.

One of the problems associated with the above mentioned known non-isolated DC - DC converters is that each one of them requires a half-bridge inverter to create a link between a DC-link capacitor and a network to be supplied. A half-bridge inverter is able to apply only half of the total DC-link voltage to the load, requiring 100% higher DC-link voltage than a full-bridge inverter. As a consequence, a DC - DC converter connected to a half-bridge inverter must have 100% higher gain than a DC - DC converter connected to a full-bridge inverter. Higher gain induces extra stress on the components of a DC - DC converter.

BRIEF DESCRIPTION OF THE INVENTION

An object of the present invention is thus to provide a non-isolated DC - DC converter that allows using a full-bridge inverter for the interface to the electrical network to be supplied. This object of the invention is achieved by a non-isolated DC - DC converter which is characterized by what is stated in the independent claim 1. The preferred embodiments of the invention are disclosed in the dependent claims.

An advantage of the non-isolated DC - DC converter of the invention is that it can be connected to an electrical network to be supplied through a full-bridge inverter. Another advantage is that the non-isolated DC - DC converter of the invention include a buck-boost characteristic that allows using components with lower blocking voltage in an inverter connected between the non-isolated DC - DC converter and an electrical network to be supplied. Further advantage of the non-isolated DC - DC converter of the invention is that it allows, when connected to an electrical network to be supplied through a full-bridge inverter, reducing an inductance of a filter between the inverter and the electrical network when operating with a three-level modulation. Only two-level modulation can be used in connection with above mentioned known non-isolated DC - DC converters. Yet another advantage is that an electronic power converter system comprising a non-isolated DC - DC converter of the invention and a full-bridge inverter allows to ground at the same time the negative input terminal of the DC - DC converter and an electrical network fed by the full-bridge inverter.

DETAILED DESCRIPTION OF THE INVENTION

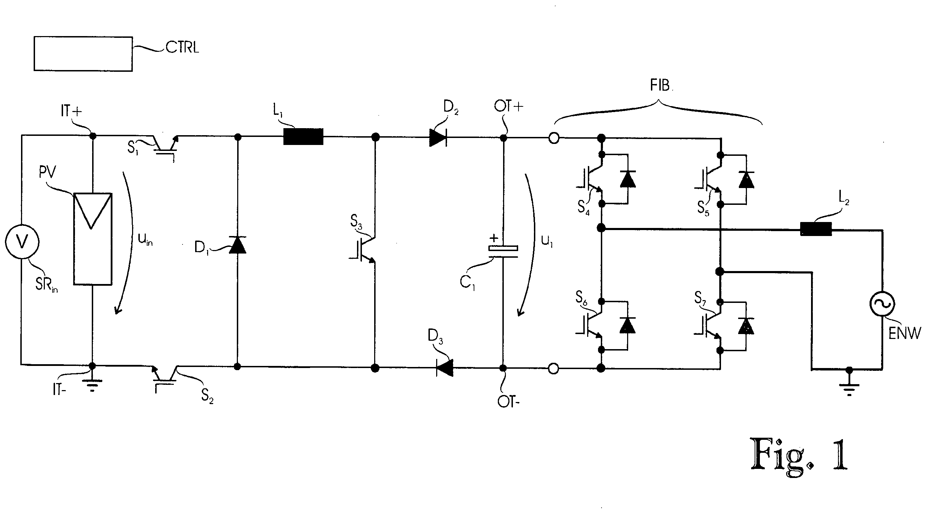

In the following the invention will be described in greater detail by means of preferred embodiments with reference to the attached Figure 1 which shows a connecting diagram of a solar power plant comprising a non-isolated DC - DC converter according to an embodiment of the invention.

The solar power plant shown in Figure 1 comprises photovoltaic cell means PV connected to an electrical network ENW through an electronic power converter system comprising a non-isolated DC - DC converter and a full-bridge inverter FIB. The photovoltaic cell means PV are adapted to convert solar energy into direct current.

The non-isolated DC - DC converter has a positive input terminal IT+, a negative input terminal IT-, a positive output terminal OT+, and a negative output terminal OT-. The negative input terminal IT- is grounded. The non-isolated DC - DC converter is adapted to convert an input DC voltage $u_{in}$ present between the positive input terminal IT+ and the negative input terminal IT- into a converted DC voltage $u_1$ present between the positive output terminal OT+ and the negative output terminal OT-.

The non-isolated DC - DC converter comprises a first switch $S_1$, a second switch $S_2$, a third switch $S_3$, a first diode $D_1$, a second diode $D_2$, a third diode $D_3$, a first inductor $L_1$ and a first capacitor $C_1$. The non-isolated DC - DC converter further comprises control means CTRL adapted to control each of the first switch $S_1$, the second switch $S_2$, and the third switch $S_3$ selectively into a closed state or into an open state, the closed state being a conductive state and the open state being a non-conductive state. The first switch $S_1$, the second switch $S_2$ and the third switch $S_3$ may be for example IGBTs or MOSFETs.

The first switch $S_1$, the first inductor $L_1$ and the second diode $D_2$ are connected in series between the positive input terminal IT+ and the positive output terminal OT+ such that the first inductor $L_1$ is connected between the first switch $S_1$ and the anode of the second diode $D_2$, the cathode of the second diode $D_2$ facing the positive output terminal OT+. The second switch $S_2$ and the third diode $D_3$ are connected in series between the negative input terminal IT- and the negative output terminal OT- such that the cathode of the third diode $D_3$ is facing the second switch $S_2$, and the

anode of the third diode $D_3$ is facing the negative output terminal OT-. The cathode of the first diode $D_1$ is connected between the first switch $S_1$ and the first inductor $L_1$, and the anode of the first diode $D_1$ is connected between the second switch $S_2$ and the cathode of the third diode $D_3$. The third switch $S_3$ is connected between a point located between the first inductor $L_1$ and the anode of the second diode $D_2$, and a point located between the second switch $S_2$ and the cathode of the third diode $D_3$. The first capacitor $C_1$ is connected between the cathode of the second diode $D_2$ and the anode of the third diode $D_3$.

The control means CTRL are adapted to provide: a first switching stage where the first switch $S_1$, the second switch $S_2$ and the third switch $S_3$ are in a closed state, a second switching stage where the first switch $S_1$, the second switch $S_2$ and the third switch $S_3$ are in an open state, and a converting operation by alternating between the first switching stage and the second switching stage. In the first switching stage the photovoltaic cell means PV are conductively connected to the first inductor $L_1$ allowing a current to flow between the photovoltaic cell means PV and the first inductor $L_1$, wherein energy is transferred from the photovoltaic cell means PV into the first inductor $L_1$. In the second switching stage the first inductor $L_1$ is conductively connected to the first capacitor $C_1$, allowing a current to flow between the first inductor $L_1$ and the first capacitor $C_1$, wherein energy is transferred from the first inductor $L_1$ into the first capacitor $C_1$.

The first capacitor $C_1$ is never directly connected to the photovoltaic cell means PV. In other words, during operation of the non-isolated DC - DC converter a current flowing between the positive input terminal IT+ and the negative input terminal IT- never flows through the first capacitor $C_1$. Consequently, the first capacitor $C_1$ is a floating capacitor.

The control means CTRL are adapted to regulate, during the converting operation, the converted DC voltage $u_1$ by adjusting the ratio of duration of the first switching stages to duration of the second switching stages. Since the first switch $S_1$, the second switch $S_2$ and the third switch $S_3$ are opened and closed simultaneously, they have a common duty cycle. The common duty cycle DS for the first switch $S_1$, the second switch $S_2$ and the third switch $S_3$ may be calculated with equation { 1 }.

$$DS = \frac{\tau_1}{T_c} \qquad\qquad \{ 1 \}$$

In equation { 1 } $\tau_1$ is the duration of the first switching stage, and $T_c$ is the cycle time. The cycle time $T_c$ is equal to a sum of a duration of the first switching stage $\tau_1$ and a duration of the second switching stage $\tau_2$. Therefore the equation for the common duty cycle DS may be written as

$$DS = \frac{\tau_1}{\tau_1 + \tau_2} \; . \qquad\qquad \{ 2 \}$$

According to equations { 1 } and { 2 } the common duty cycle DS is the proportion of time during which the controllable switches $S_1$ to $S_3$ are in the closed state. Hence adjusting the ratio of duration of the first switching stages to duration of the second switching stages means adjusting the duty-cycle DS of the first switch $S_1$, the second switch $S_2$ and the third switch $S_3$. Based on the input DC voltage $u_{in}$ and the common duty-cycle DS, the converted DC voltage $u_1$ may be calculated with equation

$$u_1 = \frac{DS}{1 - DS} \cdot u_{in} \; . \qquad\qquad \{ 3 \}$$

Equation { 3 } shows that the non-isolated DC - DC converter is able to boost or buck the input DC voltage $u_{in}$. Boosting a DC voltage means increasing the magnitude of the DC voltage, and bucking a DC voltage means decreasing the magnitude of the DC voltage.

The non-isolated DC - DC converter depicted in Figure 1 further comprises an input voltage sensor $SR_{IN}$ adapted to determine a magnitude of the input DC voltage $u_{in}$. The control means CTRL are communicatively connected to the input voltage sensor $SR_{IN}$ for receiving data relating to the magnitude of the input DC voltage $u_{in}$. The control means CTRL are adapted to adjust the ratio of duration of the first switching stages to duration of the second switching stages responsive to the data relating to the magnitude of the input DC voltage $u_{in}$.

The full-bridge inverter FIB comprises four switches denoted with $S_4$, $S_5$, $S_6$, and $S_7$. The full-bridge inverter FIB is connected to the electrical network ENW through a second inductor $L_2$, which acts as a filter inductor. The electrical network ENW is grounded. The full-bridge inverter FIB may be operated with a three-level modulation, and therefore the rating of the second inductor $L_2$ may be reduced compared with the rating required when using a half-bridge inverter. When operated with a three-level modulation, the full-bridge inverter FIB is able to apply to the electrical network ENW

a voltage $+u_1$ by closing switches $S_4$ and $S_7$, a voltage $-u_1$ by closing switches $S_5$ and $S_6$, and a zero voltage by closing switches $S_4$ and $S_5$.

Use of a non-isolated DC - DC converter according to the present invention is not limited to a solar power plant. In alternative embodiments, the photovoltaic cell means of a solar power plant may be replaced with a different type of power supply having a positive supply terminal and a negative supply terminal, the power supply being adapted to generate a direct current and to feed the direct current out of the power supply via the positive and negative supply terminals.

It will be obvious to a person skilled in the art that the inventive concept can be implemented in various ways. The invention and its embodiments are not limited to the examples described above but may vary within the scope of the claims.

**Claims**

1. A non-isolated DC - DC converter for solar power plant, the non-isolated DC - DC converter comprising a positive input terminal (IT+), a negative input terminal (IT-), a positive output terminal (OT+), and a negative output terminal (OT-), the non-isolated DC - DC converter being adapted to convert an input DC voltage ($u_{in}$) present between the positive input terminal (IT+) and the negative input terminal (IT-) into a converted DC voltage ($u_1$) present between the positive output terminal (OT+) and the negative output terminal (OT-), the non-isolated DC - DC converter comprising a first switch ($S_1$), a second switch ($S_2$), a third switch ($S_3$), a first diode ($D_1$), a second diode ($D_2$), a third diode ($D_3$), a first inductor ($L_1$) and a first capacitor ($C_1$);
the first switch ($S_1$), the first inductor ($L_1$) and the second diode ($D_2$) being connected in series between the positive input terminal (IT+) and the positive output terminal (OT+) such that the first inductor ($L_1$) is connected between the first switch ($S_1$) and the anode of the second diode ($D_2$), the cathode of the second diode ($D_2$) facing the positive output terminal (OT+);
the second switch ($S_2$) and the third diode ($D_3$) being connected in series between the negative input terminal (IT-) and the negative output terminal (OT-) such that the cathode of the third diode ($D_3$) is facing the second switch ($S_2$), and the anode of the third diode ($D_3$) is facing the negative output terminal (OT-);
the cathode of the first diode ($D_1$) being connected between the first switch ($S_1$) and the first inductor ($L_1$), the anode of the first diode ($D_1$) being connected between the second switch ($S_2$) and the cathode of the third diode ($D_3$);
the third switch ($S_3$) being connected between a point located between the first inductor ($L_1$) and the anode of the second diode ($D_2$), and a point located between the second switch ($S_2$) and the cathode of the third diode ($D_3$); and
the first capacitor ($C_1$) being connected between the cathode of the second diode ($D_2$) and the anode of the third diode ($D_3$),
wherein the non-isolated DC - DC converter further comprises control means (CTRL) adapted to control each of the first switch ($S_1$), the second switch ($S_2$) and the third switch ($S_3$) selectively into a closed state or into an open state, **characterized in that** the control means (CTRL) are adapted
to provide a first switching stage where the first switch ($S_1$), the second switch ($S_2$) and the third switch ($S_3$) are in a closed state;
to provide a second switching stage where the first switch ($S_1$), the second switch ($S_2$) and the third switch ($S_3$) are in a open state; and
to provide an converting operation by alternating between the first switching stage and the second switching stage.

2. A non-isolated DC-DC converter according to claim 1, **characterized in that** the first capacitor ($C_1$) is adapted to be a floating capacitor such that during operation of the non-isolated DC - DC converter a current flowing between the positive input terminal (IT+) and the negative input terminal (IT-) never flows through the first capacitor ($C_1$).

3. A non-isolated DC - DC converter according to claim 2, **characterized in that** in the second switching stage the first inductor ($L_1$) is conductively connected to the first capacitor ($C_1$) allowing a current to flow between the first inductor ($L_1$) and the first capacitor ($C_1$).

4. A non-isolated DC - DC converter according to any of claims 1 - 3, **characterized in that** the control means (CTRL) are adapted to regulate, during the converting operation, the converted DC voltage ($u_1$) by adjusting the ratio of duration of the-first switching stages to duration of the second switching stages.

5. A non-isolated DC - DC converter according to claim 4, **characterized in that** the control means (CTRL) are adapted to regulate the converted DC voltage ($u_1$) according to equation

$$u_1 = \frac{\dfrac{\tau_1}{\tau_1 + \tau_2}}{1 - \dfrac{\tau_1}{\tau_1 + \tau_2}} \cdot u_{in},$$

where $u_1$ is the converted DC voltage, $\tau_1$ is a duration of the first switching stage, $\tau_2$ is a duration of the second switching stage, and $u_{in}$ is an input DC voltage present between the positive input terminal (IT+) and the negative input terminal (IT-).

6. A non-isolated DC - DC converter according to claim 4 or 5, **characterized in that** the non-isolated DC - DC converter further comprises a input voltage sensor ($SR_{in}$) adapted to determine a magnitude of the input DC voltage ($u_{in}$), the control means (CTRL) being communicatively connected to the input voltage sensor ($SR_{in}$) for receiving data relating to the magnitude of the input DC voltage ($u_{in}$), the control means (CTRL) being adapted to adjust the ratio of duration of the first switching stages to duration of the second switching stages responsive to the data relating to the magnitude of the input DC voltage ($u_{in}$).

7. An electronic power converter system comprising a DC-DC converter adapted to supply an output DC voltage and an inverter adapted to invert the output DC voltage supplied by the DC-DC converter, **characterized in that** the inverter is a full-bridge inverter, and the DC-DC converter is a non-isolated DC - DC converter according to any preceding claim.

8. A power plant comprising a power supply, the power supply having a positive supply terminal and a negative supply terminal, the power supply being adapted to generate a direct current and to feed the direct current out of the power supply via the positive and negative supply terminals, **characterized in that** the power plant comprises an electronic power converter system according to claim 7, the positive supply terminal of the power supply being connected to the positive input terminal (IT+) of the non-isolated DC - DC converter, and the negative supply terminal of the power supply being connected to the negative input terminal (IT-) of the non-isolated DC - DC converter.

9. A power plant according to claim 8, **characterized in that** the negative supply terminal of the power supply is grounded.

10. A power plant according to claim 8 or 9, **characterized in that** the power plant is a solar power plant, wherein the power supply comprises photovoltaic cell means adapted to convert solar energy into direct current.

**Patentansprüche**

1. Nicht isolierter Gleichstrom-Gleichstrom-Wandler für ein Solarkraftwerk,
wobei der nicht isolierte Gleichstrom-Gleichstrom-Wandler einen positiven Eingangsanschluss (IT+), einen negativen Eingangsanschluss (IT-), einen positiven Ausgangsanschluss (OT+) und einen negativen Ausgangsanschluss (OT-) umfasst, wobei der nicht isolierte Gleichstrom-Gleichstrom-Wandler dazu eingerichtet ist, um eine Eingangsgleichspannung ($u_{in}$), die zwischen dem positiven Eingangsanschluss (IT+) und dem negativen Eingangsanschluss (IT-) vorhanden ist, in eine umgewandelte Gleichspannung ($u_1$), die zwischen dem positiven Ausgangsanschluss (OT+) und dem negativen Ausgangsanschluss (OT-) vorhanden ist, umzuwandeln,
wobei der nicht isolierte Gleichstrom-Gleichstrom-Wandler einen ersten Schalter ($S_1$), einen zweiten Schalter ($S_2$), einen dritten Schalter ($S_3$), eine erste Diode ($D_1$), eine zweite Diode ($D_2$), eine dritte Diode ($D_3$), eine erste Spule ($L_1$) und einen ersten Kondensator ($C_1$) umfasst;
wobei der erste Schalter ($S_1$), die erste Spule ($L_1$) und die zweite Diode ($D_2$) zwischen dem positiven Eingangsanschluss (IT+) und dem positiven Ausgangsanschluss (OT+) in Reihe geschaltet sind, so dass die erste Spule ($L_1$) zwischen dem ersten Schalter ($S_1$) und der Anode der zweiten Diode ($D_2$) verbunden ist, wobei die Kathode der zweiten Diode ($D_2$) dem positiven Ausgangsanschluss (OT+) zugewandt ist;
wobei der zweite Schalter ($S_2$) und die dritte Diode ($D_3$) zwischen dem negativen Eingangsanschluss (IT-) und dem negativen Ausgangsanschluss (OT-) in Reihe geschaltet sind, so dass die Kathode der dritten Diode ($D_3$) dem zweiten Schalter ($S_2$) zugewandt ist und die Anode der dritten Diode ($D_3$) dem negativen Ausgangsanschluss (OT-) zugewandt ist;
wobei die Kathode der ersten Diode ($D_1$) zwischen dem ersten Schalter ($S_1$) und der ersten Spule ($L_1$) verbunden

ist, **dadurch gekennzeichnet, dass** die Anode der ersten Diode ($D_1$) zwischen dem zweiten Schalter ($S_2$) und der Kathode der dritten Diode ($D_3$) verbunden ist;

wobei der dritte Schalter ($S_3$) zwischen einem Punkt, der sich zwischen der ersten Spule ($L_1$) und der Anode der zweiten Diode ($D_2$) befindet, und einem Punkt, der sich zwischen dem zweiten Schalter ($S_2$) und der Kathode der dritten Diode ($D_3$) befindet, verbunden ist; und

wobei der erste Kondensator ($C_1$) zwischen der Kathode der zweiten Diode ($D_2$) und der Anode der dritten Diode ($D_3$) verbunden ist,

wobei der nicht isolierte Gleichstrom-Gleichstrom-Wandler weiter Steuerungsmittel (CTRL) umfasst, die dazu eingerichtet sind, um jeden von dem ersten Schalter ($S_1$), dem zweiten Schalter ($S_2$) und dem dritten Schalter ($S_3$) selektiv in einen geschlossenen oder in einen offenen Zustand zu steuern,

**dadurch gekennzeichnet, dass** die Steuerungsmittel (CTRL) dazu eingerichtet sind, um eine erste Schaltstufe bereitzustellen, wo sich der erste Schalter ($S_1$), der zweite Schalter ($S_2$) und der dritte Schalter ($S_3$) in einem geschlossenen Zustand befinden; eine zweite Schaltstufe bereitzustellen, wo sich der erste Schalter ($S_1$), der zweite Schalter ($S_2$) und der dritte Schalter ($S_3$) in einem offenen Zustand befinden; und einen Umwandlungsbetrieb bereitzustellen durch Abwechseln zwischen der ersten Schaltstufe und der zweiten Schaltstufe.

2. Nicht isolierter Gleichstrom-Gleichstrom-Wandler nach Anspruch 1, **dadurch gekennzeichnet, dass** der erste Kondensator ($C_1$) dazu eingerichtet ist, um ein schwebender Kondensator zu sein, so dass während eines Betriebs des nicht isolierten Gleichstrom-Gleichstrom-Wandlers ein zwischen dem positiven Eingangsanschluss (IT+) und dem negativen Eingangsanschluss (IT-) fließender Strom niemals durch den ersten Kondensator ($C_1$) strömt.

3. Nicht isolierter Gleichstrom-Gleichstrom-Wandler nach Anspruch 2, **dadurch gekennzeichnet, dass** in der zweiten Schaltstufe die erste Spule (L1) leitend mit dem ersten Kondensator ($C_1$) verbunden ist, wodurch ein Strom zwischen der ersten Spule ($L_1$) und dem ersten Kondensator ($C_1$) fließen kann.

4. Nicht isolierter Gleichstrom-Gleichstrom-Wandler nach einem der Ansprüche 1 - 3, **dadurch gekennzeichnet, dass** die Steuerungsmittel (CTRL) dazu eingerichtet sind, um während des Umwandlungsbetriebs die umgewandelte Gleichspannung ($u_1$) durch Anpassen des Verhältnisses von einer Dauer der ersten Schaltstufen zu einer Dauer der zweiten Schaltstufen zu regeln.

5. Nicht isolierter Gleichstrom-Gleichstrom-Wandler nach Anspruch 4, **dadurch gekennzeichnet, dass** die Steuerungsmittel (CTRL) dazu eingerichtet sind, um die umgewandelte Gleichspannung ($u_1$) nach der Gleichung

$$u_1 = \frac{\dfrac{\tau_1}{\tau_1 + \tau_2}}{1 - \dfrac{\tau_1}{\tau_1 + \tau_2}} \cdot u_{in} \, ,$$

zu regeln, wobei $u_1$ die umgewandelte Gleichspannung ist, $\tau_1$ eine Dauer der ersten Schaltstufe ist, $\tau_2$ eine Dauer der zweiten Schaltstufe ist und $u_{in}$ eine Eingangsgleichspannung, die zwischen dem positiven Eingangsanschluss (IT+) und dem negativen Eingangsanschluss (IT-) vorhanden ist, ist.

6. Nicht isolierter Gleichstrom-Gleichstrom-Wandler nach Anspruch 4 oder 5, **dadurch gekennzeichnet, dass** der nicht isolierte Gleichstrom-Gleichstrom- Wandler weiter einen Eingangsspannungssensor ($SR_{in}$) umfasst, der dazu eingerichtet ist, um eine Größe der Eingangsgleichspannung ($u_{in}$) zu bestimmen, wobei die Steuerungsmittel (CTRL) kommunikativ mit dem Eingangsspannungssensor ($SR_{in}$) verbunden sind, um Daten zu empfangen, die auf die Größe der Eingangsgleichspannung ($u_{in}$) bezogen sind, wobei die Steuerungsmittel (CTRL) dazu eingerichtet sind, um das Verhältnis von einer Dauer der ersten Schaltstufen zu einer Dauer der zweiten Schaltstufen als Reaktion auf die Daten, die auf die Größe der Eingangsgleichspannung ($u_{in}$) bezogen sind, anzupassen.

7. Elektronisches Stromwandlersystem, das einen Gleichstrom-Gleichstrom- Wandler, der dazu eingerichtet ist, um eine Ausgangsgleichspannung zur Verfügung zu stellen, und einen Umrichter umfasst, der dazu eingerichtet ist, um die durch den Gleichstrom-Gleichstrom-Wandler zur Verfügung gestellte Ausgangsgleichspannung umzurichten, **dadurch gekennzeichnet, dass** der Umrichter ein Vollbrückenumrichter ist und der Gleichstrom-Gleichstrom-Wandler ein nicht isolierter Gleichstrom-Gleichstrom-Wandler nach einem vorstehenden Anspruch ist.

8. Kraftwerk, das eine Stromversorgung umfasst, wobei die Stromversorgung einen positiven Versorgungsanschluss und einen negativen Versorgungsanschluss hat, wobei die Stromversorgung dazu eingerichtet ist, um einen Gleichstrom zu erzeugen und den Gleichstrom über die positiven und negativen Versorgungsanschlüsse aus der Stromversorgung heraus zu speisen, **dadurch gekennzeichnet, dass** das Kraftwerk ein elektronisches Stromwandlersystem nach Anspruch 7 umfasst, der positive Versorgungsanschluss der Stromversorgung mit dem positiven Eingangsanschluss (IT+) des nicht isolierten Gleichstrom- Gleichstrom-Wandlers verbunden ist und der negative Versorgungsanschluss der Stromversorgung mit dem negativen Eingangsanschluss (IT-) des nicht isolierten Gleichstrom-Gleichstrom-Wandlers verbunden ist.

9. Kraftwerk nach Anspruch 8, **dadurch gekennzeichnet, dass** der negative Versorgungsanschluss der Stromversorgung geerdet ist.

10. Kraftwerk nach Anspruch 8 oder 9, **dadurch gekennzeichnet, dass** das Kraftwerk ein Solarkraftwerk ist, wobei die Stromversorgung Solarzellenmittel, die dazu eingerichtet sind, um Solarenergie in Gleichstrom umzuwandeln, umfasst.

**Revendications**

1. Convertisseur DC-DC non-isolé pour une centrale solaire, le convertisseur DC-DC non-isolé comprenant une borne d'entrée positive (IT+), une borne d'entrée négative (IT-), une borne de sortie positive (OT+) et une borne de sortie négative (OT-), le convertisseur DC-DC non-isolé étant adapté pour convertir une tension DC d'entrée ($u_{in}$) présente entre la borne d'entrée positive (IT+) et la borne d'entrée négative (IT-) en une tension DC convertie ($u_1$) présente entre la borne de sortie positive (OT+) et la borne de sortie négative (OT-), le convertisseur DC-DC non-isolé comprenant un premier commutateur ($S_1$), un deuxième commutateur ($S_2$), un troisième commutateur ($S_3$), une première diode ($D_1$), une deuxième diode ($D_2$), une troisième diode ($D_3$), un premier inducteur ($L_1$) et un premier condensateur ($C_1$) ;
le premier commutateur ($S_1$), le premier inducteur ($L_1$) et la deuxième diode ($D_2$) étant reliés en série entre la borne d'entrée positive (IT+) et la borne de sortie positive (OT+) de sorte que le premier inducteur ($L_1$) soit relié entre le premier commutateur ($S_1$) et l'anode de la deuxième diode ($D_2$), la cathode de la deuxième diode ($D_2$) étant tournée vers la borne de sortie positive (OT+);
le deuxième commutateur ($S_2$) et la troisième diode ($D_3$) étant reliés en série entre la borne d'entrée négative (IT-) et la borne de sortie négative (OT-) de sorte que la cathode de la troisième diode ($D_3$) soit tournée vers le deuxième commutateur ($S_2$) et que l'anode de la troisième diode ($D_3$) soit tournée vers la borne de sortie négative (OT-) ;
la cathode de la première diode ($D_1$) étant reliée entre le premier commutateur ($S_1$) et le premier inducteur ($L_1$),
**caractérisé en ce que**
l'anode de la première diode ($D_1$) est reliée entre le deuxième commutateur ($S_2$) et la cathode de la troisième diode ($D_3$) ;
le troisième commutateur ($S_3$) est relié entre un point situé entre le premier inducteur ($L_1$) et l'anode de la deuxième diode ($D_2$), et un point situé entre le deuxième commutateur ($S_2$) et la cathode de la troisième diode ($D_3$) ; et
le premier condensateur ($C_1$) est relié entre la cathode de la deuxième diode ($D_2$) et l'anode de la troisième diode ($D_3$), dans lequel le convertisseur DC-DC non-isolé comprend en outre des moyens de contrôle (CTRL) adaptés pour contrôler chacun du premier commutateur ($S_1$), du deuxième commutateur ($S_2$) et du troisième commutateur ($S_3$) sélectivement dans un état fermé ou dans un état ouvert,
**caractérisé en ce que** les moyens de contrôle (CTRL) sont adaptés
pour fournir un premier étage de commutation dans lequel le premier commutateur ($S_1$), le deuxième commutateur ($S_2$) et le troisième commutateur ($S_3$) sont dans un état fermé ;
pour fournir un second étage de commutation dans lequel le premier commutateur ($S_1$), le deuxième commutateur ($S_2$) et le troisième commutateur ($S_3$) sont dans un état ouvert ; et pour fournir une opération de conversion en alternant entre le premier étage de commutation et le second étage de commutation.

2. Convertisseur DC-DC non-isolé selon la revendication 1, **caractérisé en ce que** le premier condensateur ($C_1$) est adapté pour être un condensateur flottant de sorte que, pendant le fonctionnement du convertisseur DC-DC non-isolé, un courant circulant entre la borne d'entrée positive (IT+) et la borne d'entrée négative (IT-) ne circule jamais à travers le premier condensateur ($C_1$).

3. Convertisseur DC-DC non-isolé selon la revendication 2, **caractérisé en ce que**, dans le second étage de commutation, le premier inducteur ($L_1$) est relié de façon conductrice au premier condensateur ($C_1$), permettant à un

courant de circuler entre le premier inducteur ($L_1$) et le premier condensateur ($C_1$).

4. Convertisseur DC-DC non-isolé selon l'une quelconque des revendications 1 à 3, **caractérisé en ce que** les moyens de contrôle (CTRL) sont adaptés pour réguler, pendant l'opération de conversion, la tension DC convertie ($u_1$) en ajustant le ratio de la durée des premiers étages de commutation à la durée des seconds étages de commutation.

5. Convertisseur DC-DC non-isolé selon la revendication 4, **caractérisé en ce que** les moyens de contrôle (CTRL) sont adaptés pour réguler la tension DC convertie ($u_1$) selon l'équation

$$u_1 = \frac{\dfrac{\tau_1}{\tau_1 + \tau_2}}{1 - \dfrac{\tau_1}{\tau_1 + \tau_2}} \cdot u_{in} \, ,$$

dans laquelle $u_1$ est la tension DC convertie, $\tau_1$ est une durée du premier étage de commutation, $\tau_2$ est une durée du second étage de commutation et $u_{in}$ est une tension DC d'entrée présente entre la borne d'entrée positive (IT+) et la borne d'entrée négative (IT-).

6. Convertisseur DC-DC non-isolé selon la revendication 4 ou 5, **caractérisé en ce que** le convertisseur DC-DC non-isolé comprend en outre un capteur de tension d'entrée (SRin) adapté pour déterminer une valeur de la tension DC d'entrée ($u_{in}$), les moyens de contrôle (CTRL) étant reliés de manière communicante au capteur de tension d'entrée (SR$_{in}$) pour recevoir des données relatives à la valeur de la tension DC d'entrée ($u_{in}$), les moyens de contrôle (CTRL) étant adaptés pour ajuster le ratio de la durée des premiers étages de commutation à la durée des seconds étages de commutation en réponse aux données relatives à la valeur de la tension DC d'entrée ($u_{in}$).

7. Système de conversion de puissance électronique comprenant un convertisseur DC-DC adapté pour fournir une tension DC de sortie et un onduleur adapté pour inverser la tension DC de sortie fournie par le convertisseur DC-DC, **caractérisé en ce que** l'onduleur est un onduleur en pont complet, et le convertisseur DC-DC est un convertisseur DC-DC non-isolé selon l'une quelconque des revendications précédentes.

8. Centrale électrique comprenant une alimentation électrique, l'alimentation électrique ayant une borne d'alimentation positive et une borne d'alimentation négative, l'alimentation électrique étant adaptée pour générer un courant continu et pour amener le courant continu hors de l'alimentation électrique via les bornes d'alimentation positive et négative, **caractérisée en ce que** la centrale électrique comprend un système de conversion de puissance électronique selon la revendication 7, la borne d'alimentation positive de l'alimentation électrique étant reliée à la borne d'entrée positive (IT+) du convertisseur DC-DC non-isolé, et la borne d'alimentation négative de l'alimentation électrique étant reliée à la borne d'entrée négative (IT-) du convertisseur DC-DC non-isolé.

9. Centrale électrique selon la revendication 8, **caractérisée en ce que** la borne d'alimentation négative de l'alimentation électrique est mise à la masse.

10. Centrale électrique selon la revendication 8 ou 9, **caractérisée en ce que** la centrale électrique est une centrale solaire, dans laquelle l'alimentation électrique comprend des moyens formant cellules photovoltaïques adaptés pour convertir l'énergie
solaire en courant continu.

Fig. 1

**EP 2 367 275 B2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040164557 A
- EP 0361254 A
- WO 2009010025 A